(19) Europäisches Patentamt
European Patent Office
Office européen des brevets

(11) **EP 4 682 441 A1**

(12) **EUROPÄISCHE PATENTANMELDUNG**

(43) Veröffentlichungstag:
**21.01.2026  Patentblatt 2026/04**

(21) Anmeldenummer: **24189420.3**

(22) Anmeldetag: **18.07.2024**

(51) Internationale Patentklassifikation (IPC):
**F25B 1/10** (2006.01)     **F25B 9/00** (2006.01)
**F25B 40/02** (2006.01)

(52) Gemeinsame Patentklassifikation (CPC):
**F25B 1/10; F25B 9/008; F25B 40/02;**
F25B 2400/0409; F25B 2400/0411; F25B 2400/06;
F25B 2400/13

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Weiss Technik GmbH**
**35447 Reiskirchen (DE)**

(72) Erfinder:
• **Zahrt, Yannik**
  **35466 Rabenau (DE)**
• **Haack, Christian**
  **35037 Marburg (DE)**

(74) Vertreter: **advotec.**
**Patent- und Rechtsanwaltspartnerschaft mbB**
**Georg-Schlosser-Straße 6**
**35390 Gießen (DE)**

(54) **PRÜFKAMMER UND VERFAHREN ZUR STEUERUNG**

(57)  Die Erfindung betrifft eine Prüfkammer (35) zur Konditionierung von Luft, insbesondere Temperierkammer, Klimakammer oder dergleichen, sowie ein Verfahren zum Betrieb einer Prüfkammer, wobei die Prüfkammer einen gegenüber einer Umgebung (37) verschließbaren und temperaturgedämmten Prüfraum (36) zur Aufnahme von Prüfgut, und eine Temperiervorrichtung zur Temperierung des Prüfraums umfasst, mittels der eine Temperatur in einem Temperaturbereich von -20 °C bis +180 °C innerhalb des Prüfraums ausbildbar ist, wobei die Temperiervorrichtung eine Heizeinrichtung und ein Kühlsystem (41) umfasst, wobei das Kühlsystem eine Kühleinrichtung (42) und einen Wärmeübertrager (40), der in dem Prüfraum angeordnet ist, aufweist, wobei die Kühleinrichtung mit einem Kühlkreislauf (47) mit einem Kältemittel, einem Verdichter, einem Kondensator und einem Expansionsorgan ausgebildet ist, wobei der Wärmeübertrager an dem Kühlkreislauf angeschlossen ist, wobei das Kältemittel Kohlenstoffdioxid ist, wobei die Prüfkammer eine Steuervorrichtung zur Regelung der Temperatur in dem Prüfraum aufweist, wobei das Kühlsystem eine zweite Kühleinrichtung (43, 44, 45) mit einem zweiten Kühlkreislauf (48, 49, 50) mit dem Kältemittel, einem zweiten Verdichter, einem zweiten Kondensator und einem zweiten Expansionsorgan ausgebildet ist, wobei der Wärmeübertrage an den zweiten Kühlkreislauf angeschlossen ist, wobei die Kühleinrichtungen in Abhängigkeit der Temperatur in dem Prüfraum mittels der Steuervorrichtung steuerbar sind.

Fig. 3

## Beschreibung

Die Erfindung betrifft eine Prüfkammer, insbesondere Klimakammer zur Konditionierung von Luft, insbesondere Temperierkammer, Klimakammer oder dergleichen, sowie ein Verfahren zum Betrieb einer Prüfkammer, wobei die Prüfkammer einen gegenüber einer Umgebung verschließbaren und temperaturgedämmten Prüfraum zur Aufnahme von Prüfgut, und eine Temperiervorrichtung zur Temperierung des Prüfraums umfasst, mittels der eine Temperatur in einem Temperaturbereich von -20 °C bis +180 °C innerhalb des Prüfraums ausbildbar ist, wobei die Temperiervorrichtung eine Heizeinrichtung und ein Kühlsystem umfasst, wobei das Kühlsystem eine Kühleinrichtung und einen Wärmeübertrager, der in dem Prüfraum angeordnet ist, aufweist, wobei die Kühleinrichtung mit einem Kühlkreislauf mit einem Kältemittel, einem Verdichter, einem Kondensator und einem Expansionsventil ausgebildet ist, wobei der Wärmeübertrager an dem Kühlkreislauf angeschlossen ist, wobei das Kältemittel Kohlenstoffdioxid ist, wobei die Prüfkammer eine Steuervorrichtung zur Regelung der Temperatur in dem Prüfraum aufweist.

Derartige Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -70 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmendem Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu dem Wärmetauscher. Das Prüfgut kann so temperiert oder auch einem definierten Temperaturwechsel ausgesetzt werden. Während eines Prüfinterwalls kann dann beispielsweise eine Temperatur zwischen einem Temperaturmaximum und einem Temperaturminimum der Prüfkammer wechseln. Eine derartige Prüfkammer ist beispielweise aus der EP 0 344 397 A2 bekannt.

Das in einem Kühlkreislauf eingesetzte Kältemittel sollte ein relativ geringes $CO_2$-Äquivalent aufweisen, das heißt ein relatives Treibhauspotenzial oder auch Global Warming Potential (GWP) sollte möglichst gering sein, um eine indirekte Schädigung der Umwelt durch das Kältemittel bei Freisetzung zu vermeiden. Es ist daher auch bekannt Kohlenstoffdioxid ($CO_2$) bzw. Kohlendioxid als Reinstoffkältemittel zu verwenden. Kohlenstoffdioxid ist kostengünstig erhältlich, nicht brennbar und durch einen GWP von 1 im Wesentlichen umweltneutral. Kohlenstoffdioxid weist eine Gefriertemperatur bzw. einen Tripelpunkt von -56,6 °C auf, was eine Erzielung von niedrigeren Temperaturen mit Kohlenstoffdioxid alleine nicht ermöglicht.

Da Kohlenstoffdioxid als Kältemittel eine sehr hohe volumetrische Kälteleistung aufweist, wird selbst bei einem Einsatz von Verdichtern mit sehr wenig Hubvolumenstrom eine sehr große Kälteleistung durch den Kühlkreislauf bereitgestellt. Darüber hinaus ist ein Druckbereich von Kühlkreisläufen mit Kohlenstoffdioxid als Kältemittel bei einem transkritischen Betrieb sehr hoch (bis 120 bar), weshalb die zur Ausbildung des Kühlkreislaufs erforderlichen Komponenten vergleichsweise teuer sind. Aufgrund des hohen Drucks eines im Verhältnis dazu großen Innenvolumens des Kühlkreislaufs müssen darüber hinaus besondere Sicherheitsanforderungen erfüllt werden.

In Abhängigkeit eines Temperaturwechsels im Prüfraum treten Lastschwankungen auf, sodass von der Steuervorrichtung der Verdichter je nach Bedarf in Betrieb gesetzt oder außer Betrieb genommen wird. Ein Stillstand des Verdichters stellt sich immer dann ein, wenn keine Kühlung des Prüfraums erforderlich ist oder beispielsweise sehr hohe Temperaturen von bis zu +180 °C ausgebildet werden sollen. Soll dann nachfolgend im Rahmen eines Prüfzyklus die Temperatur im Prüfraum auf beispielsweise -20 °C abgesenkt werden, ist es eine sehr große Kälteleistung des Kühlsystems bzw. der Kühleinrichtung erforderlich, insbesondere wenn diese Absenkung der Temperatur innerhalb eines kurzen Zeitraums erfolgen soll. Weiter kann es im Rahmen eines Prüfzyklus auch vorgesehen sein, die Temperatur im Prüfraum langsam abzusenken oder auf einem niedrigen Niveau konstant zu halten. Auch hierzu muss der Verdichter stetig betrieben werden, was jedoch aufgrund einer Dimensionierung der Kühleinrichtung nach einer maximal erforderlichen Kälteleistung schwierig ist und eines zusätzlichen anlagentechnischen Aufwands bedarf. So können dann auch Speicherbehälter, interne Wärmeübertrager, Bypässe oder dergleichen in den Kühlkreislauf integriert sein. Auch ist dann ein Energieverbrauch der Kühleinrichtung bzw. des Kühlsystems stets höher als dies bei der vergleichsweise niedrigen Kälteleistung der Fall sein müsste.

Da Prüfkammern für verschiedene Anwendungszwecke eingesetzt werden, können diese zur Aufnahme von bestimmten Produkten unterschiedlich groß und demgemäß auch mit unterschiedlichen Kälteleistungen ausgebildet sein. Hieraus ergibt sich die Notwendigkeit Prüfkammern zumindest zu einem Teil individuell für die jeweiligen Anwendungsfälle herzustellen, insbesondere wenn ein energieeffizienter Betrieb der Prüfkammer gewährleistet sein soll.

Der vorliegenden Erfindung liegt daher die Aufgabe zugrunde, eine Prüfkammer zur Konditionierung von Luft und ein Verfahren zum Betrieb einer Prüfkammer vorzuschlagen, die bzw. das eine kostengünstige Herstellung und einen kostengünstigen Betrieb ermöglicht.

Diese Aufgabe wird durch eine Prüfkammer mit den Merkmalen des Anspruchs 1, eine Verwendung eines Modulsatzes mit den Merkmalen des Anspruchs 13 und ein Verfahren mit den Merkmalen des Anspruchs 14 gelöst.

Bei der erfindungsgemäßen Prüfkammer zur Konditionierung von Luft, insbesondere Temperierkammer, Klimakammer oder dergleichen, umfasst die Prüfkammer einen gegenüber einer Umgebung verschließbaren und temperaturgedämmten Prüfraum zur Aufnahme von Prüfgut, und eine Temperiervorrichtung zur Temperierung des Prüfguts, mittels der eine Temperatur in einem Temperaturbereich von -20 °C bis +180 °C innerhalb des Prüfraums ausbildbar ist, wobei die Temperiervorrichtung eine Heizeinrichtung und ein Kühlsystem umfasst, wobei das Kühlsystem eine Kühleinrichtung und einen Wärmeübertrager, der in dem Prüfraum angeordnet ist, aufweist, wobei die Kühleinrichtung mit einem Kühlkreislauf mit einem Kältemittel, einem Verdichter, einem Kondensator und einem Expansionsventil ausgebildet ist, wobei der Wärmeübertrager an den Kühlkreislauf angeschlossen ist, wobei das Kältemittel Kohlenstoffdioxid ist, wobei die Prüfkammer eine Steuervorrichtung zur Regelung der Temperatur in dem Prüfraum aufweist, wobei das Kühlsystem eine zweite Kühleinrichtung mit einem zweiten Kühlkreislauf mit dem Kältemittel, einem zweiten Verdichter, einem zweiten Kondensator und einem zweiten Expansionsventil ausgebildet ist, wobei der Wärmeübertragen an den zweiten Kühlkreislauf angeschlossen ist, wobei die Kühleinrichtungen in Abhängigkeit der Temperatur in dem Prüfraum mittels der Steuervorrichtung steuerbar sind.

Erfindungsgemäß ist vorgesehen, dass das Kühlsystem der Prüfkammer zumindest zwei Kühleinrichtungen umfasst. Beide Kühleinrichtungen sind jeweils mit einem Kühlkreislauf mit einem Kältemittel, einem Verdichter, einem Kondensator und einem Expansionsventil ausgebildet.

In beiden Kühlkreisläufen wird Kohlenstoffdioxid als Kältemittel verwendet. Beide Kühlkreisläufe sind an den Wärmeübertrager, der sich in dem Prüfraum befindet, angeschlossen. Die Kühlkreisläufe sind dabei nicht miteinander verbunden. Die Steuervorrichtung ist so ausgebildet, dass mittels der Steuervorrichtung die Kühleinrichtungen in Abhängigkeit der Temperatur in dem Prüfraum gesteuert werden können. Ist beispielsweise eine hohe Kälteleistung am Wärmeübertrager erforderlich um eine bestimmte Temperatur in dem Prüfraum auszubilden, kann die Steuervorrichtung beide Kühleinrichtungen bzw. deren jeweiligen Verdichter parallel bzw. zeitgleich betreiben. Ist nur eine geringe Kälteleistung am Wärmeübertrager im Prüfraum erforderlich, kann die Steuervorrichtung nur eine der Kühleinrichtungen bzw. deren Verdichter betreiben und die andere Kühleinrichtung bzw. deren Verdichter außer Betrieb setzen. Eine Kälteleistung oder Kühlleistung (W) ergibt sich aus dem Produkt einer Fläche (m$^2$) des Wärmeübertragers, einem

Wärmeübertragungskoeffizienten ( $\frac{W}{m2} \text{ x } K$ ) und einer Temperaturdifferenz (K).

Im Vergleich zu einer einzigen Kühleinrichtung einer Prüfkammer ist ein Innenvolumen der jeweiligen Kühlkreisläufe der erfindungsgemäßen Prüfkammer vergleichsweise kleiner. So muss dann auch nur eine vergleichsweise geringere Menge an Kältemittel in dem jeweiligen Kühlkreislauf zirkuliert werden und es ist nicht mehr erforderlich bauliche Maßnahmen zur Reduzierung der Kälteleistung am Wärmeübertrager im Prüfraum, wie beispielsweise Speicherbehälter oder dergleichen, in dem Kühlkreislauf vorzusehen. Die jeweiligen Kühlkreisläufe können daher insgesamt technisch einfacher aufgebaut sein. Dagegen muss bei den aus dem Stand der Technik bekannten Kühleinrichtungen selbst bei einer Teillast bzw. einer geringen erforderlichen Kälteleistung das gesamte Innenvolumen des Kühlkreislaufs von Kältemittel durchströmt werden, um einen Öltransport zur Schmierung des Verdichters sicherzustellen. Eine Kälteleistung des Kühlkreislaufs kann daher nicht ohne Weiteres durch eine Reduzierung eines Volumenstroms des Kältemittels abgesenkt werden.

Zwar werden bei der Herstellung der Prüfkammer zwei Kühleinrichtungen verbaut, jedoch sind diese weniger komplex aufgebaut. Durch das im Verhältnis kleinere Innenvolumen je Kühleinrichtung ändert sich ein Verhältnis von Druck des Kältemittels im Kühlkreislauf und dem Innenvolumen, wodurch weniger Sicherheitsanforderungen an den Kühlkreislauf eingehalten werden müssen. Darüber hinaus setzt eine Leckage am Kühlkreislauf nicht das gesamte Kühlsystem außer Betrieb, sodass die Kühleinrichtung mit dem noch intakten Kühlkreislauf weiter betrieben werden kann. Weiter ergibt sich eine Energieeinsparung dadurch, dass hier nur ein vergleichsweise kleinerer, einzelner Verdichter betrieben werden muss, der die geringere Menge an Kältemittel zirkuliert. Insgesamt können so über einen längeren Betriebszeitraum der Prüfkammer Energie und Kosten eingespart werden.

Leitungen der Kühlkreisläufe der jeweiligen Kühleinrichtungen können voneinander unabhängig durch den Wärmeübertrager verlaufen. Die jeweiligen Kühlkreisläufe sind dann nicht stofflich miteinander verbunden und getrennt voneinander ausgebildet. Die Leitungen der Kühlkreisläufe können dann alle an den Wärmeübertrager angeschlossen sein, jedoch innerhalb des Wärmeübertragers getrennt voneinander verlaufen. Die Leitungen können in dem Wärmeübertrager so angeordnet sein, dass diese in verschiedenen Abschnitten des Wärmeübertragers verlaufen und Bereiche bzw. Teilflächen des Wärmeübertragers, die dem jeweiligen Kühlkreislauf zugeordnet werden können, ausbilden. Alternativ kann vorgesehen sein, dass die Leitungen beispielsweise parallel durch den gesamten Wärmeübertrager verlaufen, sodass eine Gesamtfläche des Wärmeübertragers von den Kühleinrichtungen jeweils nutzbar ist.

Das Kühlsystem kann mit einer weiteren Kühleinrichtung mit einem weiteren Kühlkreislauf mit dem Kältemittel, einem weiteren Verdichter, einem weiteren Kondensator und einem weiteren Expansionsventil ausgebildet sein, wobei der Wärmeübertrager an den weiteren Kühlkreislauf angeschlossen sein kann. Folglich kann das Kühlsystem drei, vier, fünf, sechs oder auch mehr Kühleinrichtungen aufweisen, die mit ihrem jeweiligen Kühlkreislauf alle an den Wärmeübertrager angeschlossen sind. Hierdurch wird es möglich entsprechend einer erforderlichen Kälteleistung der Prüfkammer eine Anzahl an Kühleinrichtungen so miteinander zu kombinieren, dass die gewünschte Kälteleistung erzielbar ist. Auch kann dann die Steuervorrichtung je nach Bedarf nur eine Kühleinrichtung, zwei oder mehr Kühleinrichtungen sowie alle Kühleinrichtungen, je nach Temperatur- bzw. Leistungsanforderung, betreiben.

Der Wärmeübertrager kann alleine mit einem Übertragerkörper ausgebildet sein. Jeweilige Leitungen des Kühlkreislaufs können dann durch den Übertragerkörper verlaufen. Je nach Anordnung der Leitungen in dem Übertragerkörper ist es dann auch möglich eine für eine Temperierung wirksame Fläche des Übertragerkörpers vollständig oder teilweise mit der jeweiligen Leitung des jeweiligen Kühlkreislaufs zu nutzen, sodass auch mit einer vergleichsweise geringen Temperaturdifferenz von Übertragerkörper und Temperatur im Prüfraum ein dynamischer Wechsel der Temperatur im Prüfraum erfolgen kann. Wesentlich ist, dass der Übertragerkörper unmittelbar nachfolgend dem jeweiligen Expansionsventil an den jeweiligen Kühlkreislauf angeschlossen ist, derart, dass alleine über das Expansionsventil strömendes Kältemittel durch den Übertragerkörper geleitet wird. Unter einem Übertragerkörper wird hier ein Korpus verstanden, der beispielsweise einteilig oder mehrteilig ausgebildet sein kann und der von dem Kältemittel durchströmt wird. Hierunter fallen auch Leitungsanordnungen, die mit Lamellen zur besseren Wärmeübertragung versehen sind. Die Lamellen bilden dann zusammen mit der bzw. den Leitungsanordnungen den Übertragerkörper aus. Der Übertragerkörper weist dann eine zur Wärmeübertragung wirksame Fläche auf.

Die Kühleinrichtungen können jeweils als eine Baugruppe mit einer Trägereinheit mit einem zumindest daran angeordneten Verdichter, einem Kondensator und einem Expansionsventil ausgebildet sein. Die Baugruppen können so beschaffen sein, dass ein modularer Aufbau des Kühlsystems aus den Baugruppen möglich ist. Die Trägereinheit kann ein Rahmen, eine Platte, ein Gehäuse oder dergleichen sein, wobei die Trägereinheit so beschaffen sein kann, dass der Verdichter, der Kondensator und das Expansionsventil an der Trägereinheit einfach montiert und über den Kühlkreislauf verbunden werden kann. Weiter können an der Trägereinheit eine Anzahl Ventile, Lüfter des Kondensators, Bypässe des Kühlkreislaufs, ein interner Wärmeübertrager, elektrische Verbindungsleitungen, Sensoren, und andere elektrische bzw. elektronische Bauteile angeordnet sein. Die modulare Baugruppe kann als eine für sich funktionsfähige Kühleinrichtung, abgesehen von dem Wärmeübertrager, ausgebildet sein, die keiner weiteren Anbauteile bedarf. Das Kühlsystem kann dann besonders einfach aus zumindest zwei Kühleinrichtungen bzw. Baugruppen ausgebildet werden. Hier ist es dann zur Herstellung des Kühlsystems lediglich erforderlich, die Baugruppen bzw. jeweiligen Leitungen der Kühlkreisläufe mit dem Wärmeübertrager zu verbinden.

Die Prüfkammer kann mit einem vom Prüfraum räumlich abgetrennten Maschinenraum ausgebildet sein, wobei die Kühleinrichtungen in dem Maschinenraum angeordnet sein können. Wenn die Kühleinrichtungen jeweils als eine Baugruppe ausgebildet sind, können diese besonders einfach in dem Maschinenraum angeordnet werden. Die Prüfkammer kann dann die Kühleinrichtungen in einem Gehäuse der Prüfkammer aufnehmen. Der Maschinenraum kann dabei bereits schon so ausgebildet sein, dass sich eine bestimmte Anzahl an Kühleinrichtungen in dem Maschinenraum anordnen lässt. Je nach gewünschter Kälteleistung der Prüfkammer kann der Maschinenraum dann entsprechend mit Kühleinrichtungen ausgestattet werden. Dabei kann in dem Maschinenraum auch teilweise ein Leerraum verbleiben, der, wenn zu einem späteren Zeitpunkt eine höhere Kälteleistung gewünscht ist, durch nachträgliche Montage einer Kühleinrichtung ausgefüllt werden kann.

Die Kühleinrichtungen können gleichartig oder voneinander verschieden ausgebildet sein. Je nach gewünschter Kälteleistung oder Verwendung der Prüfkammer können Kühleinrichtungen mit gleicher Kälteleistung, die dann identisch ausgebildet sein können, oder Kühleinrichtungen mit verschiedener Kälteleistung zu dem Kühlsystem zusammengefasst sein. Sind zumindest drei Kühleinrichtungen vorgesehen, können beispielsweise zwei Kühleinrichtungen gleichartig und eine Kühleinrichtung verschieden ausgebildet sein. Durch die gleichartige Ausbildung oder auch modulare Ausbildung von Kühleinrichtungen mit unterschiedlicher Kälteleistung ist es nicht mehr erforderlich individuell für einen Anwendungsfall der Prüfkammer eine Kühleinrichtung zu konstruieren und herzustellen. Hierbei ist vorteilhaft, dass eine Anzahl an Kühleinrichtungen vorgefertigt und in einem Lager vorgehalten werden kann, sodass bei einer Bestellung einer Prüfkammer durch einen Kunden diese besonders schnell montiert und ausgeliefert werden kann. Hierzu ist es dann lediglich erforderlich die bereits vorhandenen Kühleinrichtungen so zusammenzustellen, dass das gewünschte Kühlsystem ausgebildet wird. Darüber hinaus können diese Kühleinrichtungen besonders kostengünstig standardisiert in einer Serienproduktion hergestellt werden.

Die Kühleinrichtungen können mit einer Kälteleistung in einem Bereich von 1 bis 20 kW ausgebildet sein. Beispielsweise kann eine Kühleinrichtung eine Kälteleistung von 1 kW und eine zweite Kühleinrichtung eine Kälteleistung von 20 kW aufweisen, die zusammen das Kühlsystem ausbilden. Kühleinrichtungen mit anderen Kälteleistungen innerhalb des Bereichs sind auch verwendbar. Die Kühleinrichtung mit niedriger Kälteleistung kann dann betrieben werden, wenn nur eine sehr geringe Kälteleistung benötigt wird, beispielsweise um eine Temperatur im Prüfraum konstant zu halten. Die Kühleinrichtung mit hoher Kälteleistung bzw. beide Kühleinrichtungen können betrieben werden, wenn ein schneller Temperaturwechsel von einer hohen Temperatur im Prüfraum zu einer niedrigen Temperatur erfolgen soll.

Zumindest der Kühlkreislauf kann mit einem Niederdruckverdichter und einem in einer Strömungsrichtung des Kältemittels dem Niederdruckverdichter nachfolgenden Hochdruckverdichter ausgebildet sein. Prinzipiell können sämtliche Kühleinrichtungen des Kühlsystems derart ausgebildet sein. Die Kühleinrichtung kann dann als sogenannte Boosteranlage ausgeführt sein. Dabei ist in dem Kühlkreislauf der Kühleinrichtung der Hochdruckverdichter dem Niederdruckverdichter in Reihe nachgeschaltet, sodass eine stufenweise Verdichtung des Kältemittels mit dem Niederdruckverdichter und nachfolgend mit dem Hochdruckverdichter erfolgt. Alternativ kann der Verdichter ein einzelner zweistufiger Verdichter sein. Im Rahmen eines Prüfzyklus kann es aufgrund von Temperaturänderungen in dem Prüfraum zu Schwankungen in einer Lastanforderung kommen. Dabei kann vorgesehen sein, den Niederdruckverdichter zusammen mit dem Hochdruckverdichter oder alleine nur den Hochdruckverdichter zu betreiben. Dies wird dann möglich, wenn der Kühlkreislauf eine Ventileinrichtung aufweist, mittels der Kältemittel zu dem Niederdruckverdichter oder zu dem Hochdruckverdichter geleitet werden kann. Die Ventileinrichtung kann beispielsweise durch ein 3-WegeVentil ausgebildet sein welches wahlweise ein Zuführen von Kältemittel zu dem Niederdruckverdichter oder zu dem Hochdruckverdichter erlaubt. Die Ventileinrichtung kann mittels der Steuervorrichtung einfach betätigt werden. Hierdurch eröffnet sich die Möglichkeit auch jede einzelne Kühleinrichtung des Kühlsystems hinsichtlich einer Kälteleistung in Grenzen zu variieren. Insgesamt kann so eine noch bessere Anpassung des Kühlsystems an einen Kälteleistungsbedarf erfolgen.

Mittels der Temperiervorrichtung kann eine Temperatur in einem Temperaturbereich von -40 °C bis +180 °C, bevorzugt von -55 °C bis +180 °C, innerhalb des Prüfraums ausgebildet werden.

Das Kältemittel kann reines Kohlenstoffdioxid sein. Reines Kohlenstoffdioxid weist einen GWP von 1 auf, ist nicht brennbar, ungefährlich und kostengünstig erhältlich. Darüber hinaus ist Kohlenstoffdioxid ein Reinstoff bzw. azeotrop, was einen vorteilhaften Betrieb der Prüfkammer ermöglicht. Vorzugsweise wird bei jedem der Kühlkreisläufe Kohlenstoffdioxid als Kältemittel verwendet. Dabei kann vorgesehen sein die jeweiligen Kühlkreisläufe in einem thermodynamisch transkritischen oder in einem unterkritischen Zustand zu betreiben. Je nach Kühllastanforderung innerhalb des Prüfraums kann der Betriebszustand mittels der Steuervorrichtung entsprechend verändert werden.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung im Prüfraum ermöglicht wird. Wenn der Wärmeübertrager und der Heiz-Wärmeübertrager mittels der Steuervorrichtung zur Kühlung oder Erwärmung der im Prüfraum umgewälzten Luft gezielt gesteuert bzw. geregelt werden können, kann mittels der Temperiervorrichtung dann innerhalb des Prüfraums eine Temperatur in dem vorstehend angegebenen Temperaturbereich ausgebildet werden.

Bei der erfindungsgemäßen Verwendung eines Modulsatzes mit zumindest drei Kühleinrichtungen zur Herstellung einer erfindungsgemäßen Prüfkammer umfasst der Modulsatz zumindest zwei gleichartig bzw. identisch ausgebildete Kühleinrichtungen und zumindest eine davon verschieden ausgebildete Kühleinrichtung, wobei aus dem Modulsatz zumindest zwei Kühleinrichtungen zur Herstellung der Prüfkammer ausgewählt werden. Der Modulsatz kann auch eine Anzahl weiterer Kühleinrichtungen, die identisch oder verschieden ausgebildet sind, umfassen. Der Modulsatz ermöglicht es eine Auswahl aus diesen identisch und/oder verschieden ausgebildeten Kühleinrichtungen zu treffen, um das Kühlsystem der erfindungsgemäßen Prüfkammer auszubilden. Die Auswahl kann so erfolgen, dass eine gewünschte Kälteleistung erzielt wird. Weiter kann bei der Auswahl auch berücksichtigt werden, inwieweit innerhalb eines Prüfablaufs vergleichsweise große Kälteleistungen für einen schnellen Temperaturwechsel und vergleichsweise kleine Kälteleistungen zum Halten einer konstanten Temperatur in dem Prüfraum benötigt werden. Weitere vorteilhafte Ausführungsformen einer Verwendung ergeben sich aus den Merkmalsbeschreibungen der auf den Vorrichtungsanspruch 1 rückbezogenen Unteransprüche.

Bei dem erfindungsgemäßen Verfahren zum Betrieb einer Prüfkammer zu Konditionierung von Luft, insbesondere Temperierkammer, Klimakammer oder dergleichen, weist die Prüfkammer eine gegenüber einer Umgebung verschließbaren und temperaturgedämmten Prüfraum zur Aufnahme von Prüfgut auf, wobei der Prüfraum mit einer Temperiervorrichtung der Prüfkammer temperiert wird, wobei mittels der Temperiervorrichtung eine Temperatur in einem Temperaturbereich von -20 °C bis +180 °C innerhalb des Prüfraums ausgebildet wird, wobei die Temperiervorrichtung eine Heizeinrichtung und ein Kühlsystem umfasst, wobei das Kühlsystem eine Kühleinrichtung und einen Wärmeübertrager, der in dem Prüfraum angeordnet ist, aufweist, wobei die Kühleinrichtung mit einem Kühlkreislauf mit einem Kältemittel, einem Verdichter, einem Kondensator und einem Expansionsventil ausgebildet ist, wobei der Wärmeübertrager an den Kühlkreislauf angeschlossen ist, wobei das Kältemittel Kohlenstoffdioxid ist, wobei eine Steuervorrichtung der Prüfkammer die Temperatur in dem Prüfraum regelt, wobei das Kühlsystem eine zweite Kühleinrichtung mit einem zweiten Kühlkreislauf mit dem Kältemittel, einem zweiten Verdichter, einem zweiten Kondensator und einem zweiten Expansionsventil ausgebildet ist, wobei der Wärmeübertrager an den zweiten Kühlkreislauf angeschlossen ist, wobei die Kühleinrichtungen in Abhängigkeit der Temperatur in dem Prüfraum mittels der Steuervorrichtung gesteuert werden. Zu den Vorteilen des erfindungsgemäßen Verfahrens wird auf die Vorteilsbeschreibung der erfindungsgemäßen Prüfkammer verwiesen.

Die Steuervorrichtung kann die jeweiligen Kühleinrichtungen in Abhängigkeit einer zur Erreichung der Temperatur in dem Prüfraum erforderlichen Kälteleistung betreiben. Dazu kann die Steuervorrichtung die Kühleinrichtungen gemeinsam oder alleine für sich betreiben. Zumindest eine der Kühleinrichtungen kann dann von der Steuereinrichtung außer Betrieb genommen werden. Da dann insgesamt ein geringeres Kältemittelvolumen zirkuliert werden muss, kann Energie eingespart werden.

Weitere Ausführungsformen des Verfahrens ergeben sich aus den Merkmalsbeschreibungen der auf den Vorrichtungsanspruch 1 rückbezogenen Unteransprüche.

Nachfolgend werden eine bevorzugte Ausführungsformen der Erfindung unter Bezugnahme auf die beigefügten Zeichnungen näher erläutert.

Es zeigen:

**Fig. 1**    eine schematische Darstellung einer Ausführungsform einer Kühleinrichtung;

**Fig. 2**    eine perspektivische Ansicht einer weiteren Ausführungsform einer Kühleinrichtung;

**Fig. 3**    eine schematische Darstellung einer Prüfkammer mit einem Kühlsystem.

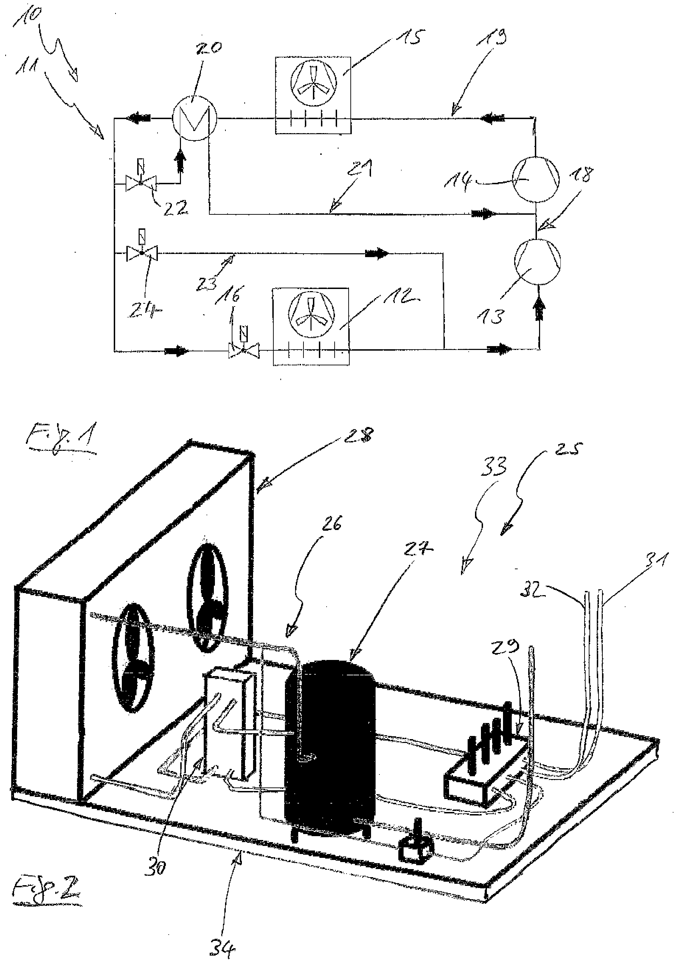

Die **Fig. 1** zeigt eine mögliche Ausführungsform einer Kühleinrichtung 10 eines Kühlsystems einer hier nicht dargestellten Prüfkammer. Das Kühlsystem weist dabei zumindest eine zweite Kühleinrichtung auf, die hier nicht gezeigt ist. Die Kühleinrichtung 10 umfasst einen Kühlkreislauf 11 mit Kohlenstoffdioxid ($CO_2$) als einem Kältemittel, einem Wärmeübertrager 12, einen Niederdruckverdichter 13, einem Hochdruckverdichter 14, einem Kondensator 15 und einem Expansionsventil 16. Der Wärmerübertrager 12 ist hier Teil des nicht dargestellten Kühlsystems der Prüfkammer. Der Kondensator 15 ist hier in Art eines Wärmeübertragers bzw. Gaskühlers ausgebildet und über ein Wärmeträgermedium, wie beispielsweise Luft oder Wasser, gekühlt. Der Wärmeübertrager 12 ist in einem hier nicht dargestellten Luftbehandlungskanal eines Prüfraumes der Prüfkammer angeordnet, derart, dass Luft im Prüfraum, die über den Luftbehandlungskanal umgewälzt wird, mittels des Wärmeübertragers 12 gekühlt werden kann. Weiter weist der Kühlkreislauf 11 eine Niederdruckseite 17, eine Mitteldruckseite 18 und eine Hochdruckseite 19 auf. In der Niederdruckseite 17 ist ein Druck des Kältemittels vergleichsweise niedriger als in der Mitteldruckseite 18. In der Mitteldruckseite 18 ist ein Druck des Kältemittels vergleichsweise niedriger als in der Hochdruckseite 19.

Der Kühlkreislauf 11 weist weiter in einer Strömungsrichtung des Kältemittels nachfolgend einen internen Wärmeübertrager 20 und vor dem Expansionsventil 16 einen Mitteldruckbypass 21 auf, der in der Strömungsrichtung nachfolgend dem Niederdruckverdichter 13 und vor dem Hochdruckverdichter 14 mündet. In dem Mitteldruckbypass 24 ist ein Mitteldruckventil 22 angeordnet. Das Mitteldruckventil 22 ist dabei in der Strömungsrichtung vor dem internen Wärmeübertrager 20 angeschlossen. Vor dem Kondensator 15 kann nun im Wesentlichen teilflüssiges Kältemittel durch die Hochdruckseite 19 des internen Wärmeübertragers 20 geleitet und bei Bedarf über das Mitteldruckventil 22 in die Mitteldruckseite 18 des internen Wärmeübertragers 20 dosiert werden. Dabei wird das Kältemittel der Hochdruckseite 19 so weit unterkühlt, dass am Expansionventil 16 bzw. dem Wärmeübertrager 12 eine noch niedrigere Temperatur ausgebildet werden kann. Gleichzeitig kann das über den Mitteldruckbypass 21 strömende Kältemittel dazu benutzt werden, eine Sauggastemperatur des Hochdruckverdichters 14 vergleichsweise niedrig zu halten.

Darüber hinaus umfasst der Kühlkreislauf 11 einen zweiten Bypass 23 mit einem zweiten Bypassventil 24. Der zweite Bypass 23 ist in der Strömungsrichtung des Kältemittels nachfolgend dem internen Wärmeübertrager 20 und vor dem Expansionsventil 16 sowie in der Strömungsrichtung nachfolgend dem Wärmeübertrager 12 und vor dem Niederdruckverdichter 13 an den Kühlkreislauf 11 angeschlossen. Mittels des zweiten Bypassventils 24 kann flüssiges Kältemittel auf die Niederdruckseite 17, vorbei an dem Expansionsventil 16 und dem Wärmeübertrager 12, geleitet werden. Dadurch wird es möglich, eine Sauggastemperatur und/oder einen Sauggasdruck in der Niederdruckseite 17 vor dem Niederdruckverdichter 13 zu regeln. Eine Regelung der Kühleinrichtung 10 kann mittels einer nicht dargestellten Steuervorrichtung der Prüfkammer und im Kühlkreislauf 11 befindlichen Sensoren, insbesondere Druck- und Temperatursensoren, erfolgen.

Die **Fig. 2** zeigt eine perspektivische Ansicht einer Kühleinrichtung 25 in Art der Kühleinrichtung aus **Fig. 1.** Die Kühleinrichtung 25 ist auch hier aus einem Kühlkreislauf 26 mit einem Kältemittel, insbesondere Kohlenstoffdioxid, einem Verdichter 27, einem Kondensator 28 bzw. Gaskühler und einem Expansionsventil 29 ausgebildet. Die Kühleinrichtung 25 ist Teil eines Kühlsystems einer hier nicht dargestellten Prüfkammer. Das Kühlsystem weist dabei zumindest eine zweite Kühleinrichtung auf, die hier nicht gezeigt ist. Die Kühleinrichtung 25 weist einen internen Wärmeübertrager 30 auf. Die Leitungen 31, 32 dienen zur Verbindung mit einem hier nicht dargestellten Wärmeübertrager, welcher sich in einem Prüfraum der Prüfkammer befindet. Die Kühleinrichtung 25 ist hier als eine modulare Baugruppe 33 mit einer Trägereinheit 34 ausgebildet, wobei der Verdichter 27, der Kondensator 28, das Expansionsventil 29 und der interne Wärmeübertrager 30 auf der Trägereinheit 34 fest montiert sind. Der Verdichter 27 kann auch durch einen Niederdruckverdichter und einen Hochdruckverdichter ausgebildet sein. Die Baugruppe 33 kann so in Art eines Zwischenprodukts vormontiert werden. Zur Integration innerhalb einer Prüfkammer ist es dann lediglich erforderlich die Baugruppe 33 über die Leitungen 31 und 32 an einen hier nicht gezeigten Wärmeübertrager des Kühlsystems anzuschließen.

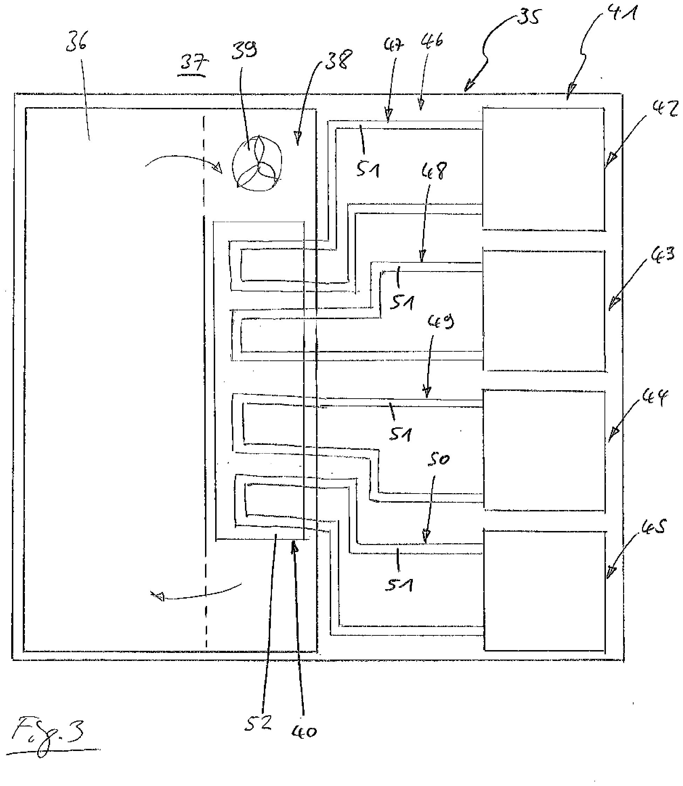

Die **Fig. 3** zeigt eine schematische Darstellung einer Prüfkammer 35 mit einem Prüfraum 36, der gegenüber einer Umgebung 37 dicht verschlossen ist. Innerhalb des Prüfraums 36 ist ein Umluftkanal 38 ausgebildet durch den die im Prüfraum 36 befindliche Luft zirkuliert werden kann. Dies erfolgt mittels eines Lüfters 39 in dem Umluftkanal 38. Innerhalb des Umluftkanals 38 ist ein Wärmeübertrager 40 eines Kühlsystems 41 angeordnet. Das Kühlsystem 41 ist aus Kühleinrichtungen 42, 43, 44, 45 gebildet. Die Kühleinrichtungen 42, 43, 44, 45 sind in einem Maschinenraum 46 der Prüfkammer 35 angeordnet. Es kann jedoch auch vorgesehen sein, diese außerhalb des Maschinenraums 46 anzuordnen. Jeweils Kühlkreisläufe 47, 48, 49, 50 der Kühleinrichtungen 42, 43, 44 bzw. 45 sind über Leitungen 51 mit dem Wärmeübertrager 40 verbunden.

Der Wärmeübertrager 40 ist durch einen Übertragerkörper 52 ausgebildet. Die Leitungen 51 bzw. Kühlkreisläufe 47, 48, 49, 50 verlaufen jeweils unabhängig voneinander und stofflich getrennt durch den Übertragerkörper 52. Je nachdem welche Kälteleistung innerhalb des Prüfraums 36 benötigt wird, kann nun von einer hier nicht dargestellten Steuervorrichtung der Prüfkammer die Kühleinrichtung 42, 43, 44 und/oder 45 betrieben oder außer Betrieb gesetzt werden. Der Wärmeübertrager 40 wird dann partiell oder vollständig gekühlt. Die Kühleinrichtungen 42, 43, 44, 45 können identisch und/oder voneinander verschieden mit gleichen oder unterschiedlichen Kälteleistungen ausgebildet sein. Je nach einem Bedarf an Kälteleistung in dem Prüfraum 36 kann dann die Steuervorrichtung die jeweils geeignete Kühleinrichtung 42, 43, 44 oder 45 in Betrieb nehmen oder außer Betrieb setzen.

**Bezugszeichenliste**

| | | | | |
|---|---|---|---|---|
| 10 | Kühleinrichtung | | 40 | Wärmeübertrager |
| 11 | Kühlkreislauf | | 41 | Kühlsystem |
| 12 | Wärmeübertrager | | 42 | Kühleinrichtung |
| 13 | Niederdruckverdichter | | 43 | Kühleinrichtung |
| 14 | Hochdruckverdichter | | 44 | Kühleinrichtung |
| 15 | Kondensator | | 45 | Kühleinrichtung |
| 16 | Expansionsventil | | 46 | Maschinenraum |
| 17 | Niederdruckseite | | 47 | Kühlkreislauf |
| 18 | Mitteldruckseite | | 48 | Kühlkreislauf |
| 19 | Hochdruckseite | | 49 | Kühlkreislauf |
| 20 | interner Wärmeübertrager | | 50 | Kühlkreislauf |
| 21 | Mitteldruckbypass | | 51 | Leitung |
| 22 | Mitteldruckventil | | 52 | Übertragerkörper |
| 23 | zweiter Bypass | | | |
| 24 | zweites Bypassventil | | | |
| 25 | Kühleinrichtung | | | |
| 26 | Kühlkreislauf | | | |
| 27 | Verdichter | | | |
| 28 | Kondensator | | | |
| 29 | Expansionsventil | | | |
| 30 | interner Wärmeübertrager | | | |
| 31 | Leitung | | | |
| 32 | Leitung | | | |
| 33 | Baugruppe | | | |
| 34 | Trägereinheit | | | |
| 35 | Prüfkammer | | | |
| 36 | Prüfraum | | | |
| 37 | Umgebung | | | |
| 38 | Umluftkanal | | | |
| 39 | Lüfter | | | |

**Patentansprüche**

1.  Prüfkammer (35) zur Konditionierung von Luft, insbesondere Temperierkammer, Klimakammer oder dergleichen, wobei die Prüfkammer einen gegenüber einer Umgebung (37) verschließbaren und tempergedämmten Prüfraum (36) zur Aufnahme von Prüfgut, und eine Temperiervorrichtung zur Temperierung des Prüfraums umfasst, mittels der eine Temperatur in einem Temperaturbereich von -20 °C bis +180 °C innerhalb des Prüfraums ausbildbar ist, wobei die Temperiervorrichtung eine Heizeinrichtung und ein Kühlsystem (41) umfasst, wobei das Kühlsystem eine Kühleinrichtung (10, 25, 42, 43, 44, 45) und einen Wärmeübertrager (12, 40), der in dem Prüfraum angeordnet ist, aufweist, wobei die Kühleinrichtung mit einem Kühlkreislauf (11, 26, 47, 48, 49, 50) mit einem Kältemittel, einem Verdichter (13, 14, 27), einem Kondensator (15, 28) und einem Expansionsventil (16, 29) ausgebildet ist, wobei der Wärmeübertrager an den Kühlkreislauf angeschlossen ist, wobei das Kältemittel Kohlenstoffdioxid ($CO_2$) ist, wobei die Prüfkammer eine Steuervorrichtung zur Regelung der Temperatur in dem Prüfraum aufweist,
    **dadurch gekennzeichnet,**
    **dass** das Kühlsystem eine zweite Kühleinrichtung (10, 25, 42, 43, 44, 45) mit einem zweiten Kühlkreislauf (11, 26, 47, 48, 49, 50) mit dem Kältemittel, einem zweiten Verdichter (13, 14, 27), einem zweiten Kondensator (15, 28) und einem zweiten Expansionsventil (16, 29) ausgebildet ist, wobei der Wärmeübertrager an den zweiten Kühlkreislauf angeschlossen ist, wobei die Kühleinrichtungen in Abhängigkeit der Temperatur in dem Prüfraum mittels der Steuervorrichtung steuerbar sind.

2.  Prüfkammer nach Anspruch 1,
    **dadurch gekennzeichnet,**
    **dass** Leitungen (31, 32, 51) der Kühlkreisläufe (11, 26, 47, 48, 49, 50) der jeweiligen Kühleinrichtungen (10, 25, 42, 43, 44, 45) voneinander unabhängig durch den Wärmeübertrager (12, 40) verlaufen.

3.  Prüfkammer nach Anspruch 1 oder 2,
    **dadurch gekennzeichnet,**
    **dass** das Kühlsystem (41) mit einer weiteren Kühleinrichtung (10, 25, 42, 44, 45) mit einem weiteren Kühlkreislauf (11, 26, 47, 48, 49, 50) mit dem Kältemittel, einem weiteren Verdichter (13, 14, 27), einem weiteren Kondensator (15, 28) und einem weiteren Expansionsventil (16, 29) ausgebildet ist, wobei der Wärmeübertrager (12, 40) an den weiteren Kühlkreislauf angeschlossen ist.

4.  Prüfkammer nach einem der vorangehenden Ansprüche,
    **dadurch gekennzeichnet,**
    **dass** der Wärmeübertrager (12, 40) mit alleine einem Übertragerkörper (52) ausgebildet ist.

5.  Prüfkammer nach einem der vorangehenden Ansprüche,
    **dadurch gekennzeichnet,**
    **dass** die Kühleinrichtungen (10, 25, 42, 43, 44, 45) jeweils als eine Baugruppe (33) mit einer Trägereinheit (34) mit einem zumindest daran angeordneten Verdichter (13, 14, 27), einem Kondensator (15, 28) und einem Expansionsventil (16, 29) ausgebildet sind.

6.  Prüfkammer nach einem der vorangehenden Ansprüche,
    **dadurch gekennzeichnet,**
    **dass** die Prüfkammer (35) mit einem vom Prüfraum (36) räumlich abgetrennten Maschinenraum (46) ausgebildet ist, wobei die Kühleinrichtungen (10, 25, 42, 43, 44, 45) in dem Maschinenraum angeordnet sind.

7.  Prüfkammer nach einem der vorangehenden Ansprüche,
    **dadurch gekennzeichnet,**
    **dass** die Kühleinrichtungen (10, 25, 42, 43, 44, 45) gleichartig oder voneinander verschieden ausgebildet sind.

8.  Prüfkammer nach einem der vorangehenden Ansprüche,
    **dadurch gekennzeichnet,**
    **dass** die Kühleinrichtungen (10, 25, 42, 43, 44, 45) mit einer Kälteleistung in einem Bereich von 1 bis 20 KW ausgebildet sind.

9.  Verfahren nach einem der vorangehenden Ansprüche,
    **dadurch gekennzeichnet,**
    **dass** zumindest der Kühlkreislauf (11, 26, 47, 48, 49, 50) mit einem Niederdruckverdichter (13) und einem in einer Strömungsrichtung des Kältemittels dem Niederdruckverdichter nachfolgenden Hochdruckverdichter (14) ausgebildet ist.

10. Prüfkammer nach einem der vorangehenden Ansprüche,
    **dadurch gekennzeichnet,**
    **dass** mittels der Temperiervorrichtung eine Temperatur in einem Temperaturbereich von -40 °C bis +180 °C, bevorzugt von -55 °C bis +180 °C, innerhalb des Prüfraums (36) ausbildbar ist.

11. Prüfkammer nach einem der vorangehenden Ansprüche,
    **dadurch gekennzeichnet,**
    **dass** das Kältemittel reines Kohlenstoffdioxid ($CO_2$) ist.

12. Prüfkammer nach einem der vorangehenden Ansprüche,
    **dadurch gekennzeichnet,**
    **dass** die Temperiervorrichtung eine Heizeinrichtung mit einer Heizung und einen Heiz-Wärmeübertrager in dem Prüfraum (36) aufweist.

13. Verwendung eines Modulsatzes mit zumindest drei Kühleinrichtungen (10, 25, 42, 43, 44, 45) zur Herstellung einer Prüfkammer (35) nach einem der vorangehenden Ansprüche, wobei der Modulsatz zumindest zwei gleichartig ausgebildete Kühleinrichtungen und zumindest eine davon verschieden ausgebildete Kühleinrichtung umfasst, wobei aus dem Modulsatz zumindest zwei Kühleinrichtungen zur Herstellung der Prüfkammer ausgewählt werden.

14. Verfahren zum Betrieb einer Prüfkammer (35) zur Konditionierung von Luft, insbesondere Temperierkammer, Klimakammer oder dergleichen, wobei die Prüfkammer einen gegenüber einer Umgebung (37) verschließbaren und temperaturgedämmten Prüfraum (36) zur Aufnahme von Prüfgut aufweist, wobei der Prüfraum mit einer Temperiervorrichtung der Prüfkammer temperiert wird, wobei mittels der Temperiervorrichtung eine Temperatur in einem Temperaturbereich von -20 °C bis +180 °C innerhalb des Prüfraums ausgebildet wird, wobei die Temperiervorrichtung eine Heizeinrichtung und ein Kühlsystem (41) umfasst, wobei das Kühlsystem eine Kühleinrichtung (10, 25, 42, 43, 44, 45) und einen Wärmeübertrager (12, 40), der in dem Prüfraum angeordnet ist, aufweist, wobei die Kühleinrichtung mit einem Kühlkreislauf (11, 26, 47, 48, 49, 50) mit einem Kältemittel, einem Verdichter (13, 14, 27), einem Kondensator (15, 28) und einem Expansionsventil (16, 29) ausgebildet ist, wobei der Wärmeübertrager an den Kühlkreislauf angeschlossen ist, wobei das Kältemittel Kohlenstoffdioxid ($CO_2$) ist, wobei eine Steuervorrichtung der Prüfkammer die Temperatur in dem Prüfraum regelt,
    **dadurch gekennzeichnet,**
    **dass** das Kühlsystem eine zweite Kühleinrichtung (10, 25, 42, 43, 44, 45) mit einem zweiten Kühlkreislauf (11, 26, 47, 48, 49, 50) mit dem Kältemittel, einem zweiten Verdichter (13, 14, 27), einem zweiten Kondensator (15, 28) und einem zweiten Expansionsventil (16, 29) ausgebildet ist, wobei der Wärmeübertrager an den zweiten Kühlkreislauf angeschlossen ist, wobei die Kühleinrichtungen in Abhängigkeit der Temperatur in dem Prüfraum mittels der Steuervorrichtung gesteuert werden.

15. Verfahren nach Anspruch 14,
    **dadurch gekennzeichnet,**
    **dass** die Steuervorrichtung die jeweiligen Kühleinrichtungen (10, 25, 42, 43, 44, 45) in Abhängigkeit einer zur Erreichung der Temperatur in dem Prüfraum (36) erforderlichen Kälteleistung betreibt.

Fig.1

Fig.2

Fig. 3

EUROPÄISCHER RECHERCHENBERICHT

Nummer der Anmeldung

EP 24 18 9420

Europäisches Patentamt
European Patent Office
Office européen des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 204378 A1 (WEISS UMWELTTECHNIK GMBH [DE]) 21. September 2017 (2017-09-21) * Absätze [0008] - [0022]; Abbildung 1 * ----- | 1-15 | INV. F25B1/10 F25B9/00 F25B40/02 |
| A | WO 2014/076891 A1 (NAGANO SCIENCE CO LTD [JP]) 22. Mai 2014 (2014-05-22) * Seiten 2-9; Abbildungen 1-4 * ----- | 1-15 | |
| A | US 11 561 211 B2 (WEISS UMWELTTECHNIK GMBH [DE]; WEISS TECHNIK GMBH [DE]) 24. Januar 2023 (2023-01-24) * Spalten 2-10; Abbildung 1 * ----- | 1-15 | |

RECHERCHIERTE SACHGEBIETE (IPC)

F25B

Der vorliegende Recherchenbericht wurde für alle Patentansprüche erstellt

| Recherchenort | Abschlußdatum der Recherche | Prüfer |
|---|---|---|
| München | 25. Oktober 2024 | Amous, Moez |

EPO FORM 1503 03.82 (P04C03)

# EP 4 682 441 A1

## ANHANG ZUM EUROPÄISCHEN RECHERCHENBERICHT
## ÜBER DIE EUROPÄISCHE PATENTANMELDUNG NR.

EP 24 18 9420

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2024

| Im Recherchenbericht angeführtes Patentdokument | Datum der Veröffentlichung | Mitglied(er) der Patentfamilie | Datum der Veröffentlichung |
|---|---|---|---|
| DE 102016204378 A1 | 21-09-2017 | CN 108779941 A | 09-11-2018 |
| | | DE 102016204378 A1 | 21-09-2017 |
| | | EP 3430325 A1 | 23-01-2019 |
| | | ES 2939592 T3 | 25-04-2023 |
| | | US 2019093926 A1 | 28-03-2019 |
| | | WO 2017157864 A1 | 21-09-2017 |
| WO 2014076891 A1 | 22-05-2014 | JP 2014098521 A | 29-05-2014 |
| | | WO 2014076891 A1 | 22-05-2014 |
| US 11561211 B2 | 24-01-2023 | CN 113280567 A | 20-08-2021 |
| | | EP 3859235 A1 | 04-08-2021 |
| | | US 2021239668 A1 | 05-08-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0344397 A2